# EUROPÄISCHE PATENTSCHRIFT

(11) **EP 4 323 661 B1**
(45) Veröffentlichungstag und Bekanntmachung des Hinweises auf die Patenterteilung: **10.09.2025**
(21) Anmeldenummer: 22721761.9
(22) Anmeldetag: 08.04.2022
(51) Int. Cl.: F16C 29/02, F16C 29/00

(54) **GLEITLAGERANORDNUNG UND LINEARSCHLITTEN MIT FESTSTELLBREMSE**
PLAIN BEARING ARRANGEMENT AND LINEAR SLIDE WITH HAND BRAKE
AGENCEMENT D'UN PALIER LISSE AVEC CHARIOT À GLISSEMENT LINÉAIRE ET FREIN À MAIN

(30) Priorität: 12.04.2021 DE 202021101950 U
(43) Veröffentlichungstag der Anmeldung: 21.02.2024
(73) Patentinhaber: igus GmbH, 51147 Köln (DE)
(72) Erfinder: TÜRKER, Muhammet Erkam, 52388 Nörvenich (DE)
(74) Vertreter: Lippert Stachow Patentanwälte Rechtsanwälte
(86) Internationale Anmeldenummer: PCT/EP2022/059517
(87) Internationale Veröffentlichungsnummer: WO 2022/218877

(56) Entgegenhaltungen:
- DE-U1- 9 417 944
- US-A- 5 732 799

## Beschreibung

Die Erfindung betrifft eine lineare Gleitlageranordnung mit einer sich in einer Längsrichtung erstreckenden Schiene, einem darauf gleitenden Schlitten und einer Feststellbremse sowie einen Schlitten.

Gleitlageranordnungen dieser Art finden vielseitige Verwendung im Maschinenbau, beispielsweise, wenn eine wiederholte Verschiebung von Bauelementen und Baugruppen zwischen unterschiedlichen Positionen erforderlich ist. Eine solche Verschiebung kann beispielsweise durch mechanische Antriebe, etwa automatisch gesteuert, oder auch, zum Beispiel bei Umrüstarbeiten, manuell erfolgen. In diesem Fall ist es oft erwünscht, den Schlitten in einer bestimmten Position auf der Schiene zu arretieren.

Bei einem bekannten Gleitlagersystem mit Kugellagerbuchsen (2DA QuickSlide-System mit Bremse, Thomson, Radford VA, USA) kann ein in einer Ausnehmung des Schienenkörpers zwischen den Führungsabschnitten angeordneter, am Schlitten befestigter Klemmkörper so um die Längsachse des Schlittens geschwenkt werden, dass er sich in der Ausnehmung verklemmt. Dabei sollen keine Kräfte auftreten, welche die Kugellager zusätzlich belasten oder den Schlittenkörper verformen könnten. Bei dieser Konstruktion ist die Gestaltungsfreiheit für den Schienenkörper eingeschränkt, da eine durchgehende Ausnehmung vorhanden sein muss. Außerdem ist die Bedienung des Klemmkörpers schwierig und gefährlich, weil sie im Bewegungsbereich des Schlittens erfolgen muss.

Ein Klemmelement zur Befestigung auf Profilschienenführungen mit einem Gehäuse, einem Handgriff und einem Klemmblock wird ebenfalls auf dem Markt angeboten (Zimmer GROUP GmbH, Rheinau, DE). Das Gehäuse kann auf die Profilschiene aufgesetzt werden, sodass sich der Handgriff außerhalb des Bewegungsbereichs eines von der Profilschiene geführten Schlittens befindet. Durch Drehung des Handgriffs kann ein Abschnitt der Profilschiene zwischen Gehäuse und Klemmblock eingeklemmt werden. Dieses Klemmelement ist jedoch nur zusätzlich zu einem von der Profilschiene geführten Schlitten verwendbar und nur durch zeitraubende Drehung des Handgriffs aktivierbar. Eine solche Gleitlageranordnung nach dem Oberbegriff des Anspruchs 1 ist aus DE 94 17 944 U1 bekannt.

Aufgabe der Erfindung ist es, einen Schlitten und eine Gleitlageranordnung bereitzustellen, bei welcher der Schlitten mit einer einfachen Handbewegung an der Schiene festgelegt bzw. wieder gelöst werden kann, ohne dass nach Möglichkeit die Lagerflächen durch zusätzliche Kräfte belastet werden oder zusätzliche Bauteile notwendig werden.

Diese Aufgabe wird durch eine Gleitlageranordnung nach dem Hauptanspruch gelöst.

Die erfindungsgemäße Gleitlageranordnung umfasst eine Schiene und einen Schlitten. Die Schiene weist einen sich in einer Längsrichtung erstreckenden Schienenkörper auf, an dem zwei sich in der Längsrichtung erstreckende und in einer Querrichtung voneinander beabstandete zylindrische Führungsabschnitte vorgesehen sind. Bevorzugt sind die Schiene und die Führungsabschnitte in Längsrichtung langgestreckt ausgebildet. Die Zylinderachsen der Führungsabschnitte verlaufen in der Längsrichtung. Die Querrichtung steht senkrecht auf der Längsrichtung. Bevorzugt sind die Führungsabschnitte an den beiden Längsseiten des Schienenkörpers angeordnet, die sich entlang der Längsrichtung erstrecken und ein Ende des Schienenkörpers in Querrichtung bilden. Die Führungsabschnitte sind jeweils über einen Verbindungsbereich mit dem Schienenkörper verbunden. Der Verbindungsbereich kann insbesondere als Steg ausgebildet sein, der bevorzugt in Längsrichtung durchgehen, insbesondere ununterbrochen, zwischen Schienenkörper und jeweiligem Führungsabschnitt verläuft. Der Schlitten weist einen sich in Querrichtung entlang des Schienenkörpers erstreckenden Schlittenkörper auf. Bevorzugt überspannt der Schlittenkörper den Schienenkörper in Querrichtung. An dem Schlittenkörper sind Lagerelemente vorgesehen, von denen zumindest eines einem ersten der Führungsabschnitte zugeordnet ist und zumindest ein weiteres einem zweiten der Führungsabschnitte zugeordnet sind. Erster und zweiter Führungsabschnitt sind die beiden in Querrichtung voneinander, sich in Längsrichtung erstreckende zylindrischen Führungsabschnitte der Schiene. Die Lagerelemente weisen jeweils eine zu dem ihnen zugeordneten Führungsabschnitt korrespondierende zylindrische Durchführung mit einem Längsspalt zum Durchlassen des Verbindungsbereichs auf. Die Durchführungen sind dergestalt korrespondierend zu dem jeweils zugeordneten Führungsabschnitt ausgebildet, dass der zugeordnete Führungsabschnitt im bestimmungsgemäßen Zustand der Gleitlageranordnung in der Durchführung angeordnet ist und die Durchführung den Führungsabschnitt zumindest abschnittsweise umschließt, so dass der Führungsabschnitt in Längsrichtung in der Durchführung geführt an dem Schlitten entlanggleiten kann. Bevorzugt umschließt die Durchführung die Zylinderachse des zugeordneten Führungsabschnitts über einen Winkelbereich von mindestens 200°, insbesondere mindestens 220°, insbesondere mindestens 240°, insbesondere mindestens 260°. An der Stelle, an der die Durchführung die Zylinderachse des Führungsabschnitts nicht umschließt, ist der Längsspalt vorgesehen. In den Durchführungen sind Gleitelemente angeordnet, die in der jeweiligen Durchführung eine Gleitanlagefläche ausbilden, die in Einbaulage an dem jeweils zugeordneten Führungsabschnitt anliegt. Der Führungsabschnitt liegt somit mit einem Umfangsabschnitt an der durch das in der zugeordneten Durchführung angeordnete Gleitelement ausgebildeten Gleitanlagefläche an. Bevorzugt umgreift das Gleitelement den Führungsabschnitt über einen Winkelbereich von mindestens 200°, insbesondere mindestens 220°, insbesondere mindestens 240°, insbesondere mindestens 260° um dessen Zylinderachse.

Erfindungsgemäß ist ein erstes der Lagerelemente dem ersten Führungsabschnitt zugeordnet, wobei der Schlitten einen Halteabschnitt aufweist, der mit einem Lager versehen ist, in dem die Schwenkachse eines Schwenkhebels gelagert ist. Der Schwenkhebel ist in einer ersten und in einer zweiten Position anordenbar, wobei der Schwenkhebel mit einer Schwenkbewegung um mindestens 45°, insbesondere um mindestens 60°, insbesondere um 90°, um die Schwenkachse aus der ersten Position in die zweite Position schwenkbar ist. Der Schwenkhebel weist an einer Seite der Schwenkachse einen kurzen, als Anpressabschnitt ausgebildeten Abschnitt auf und an der anderen Seite der Schwenkachse einen langen, als Betätigungsabschnitt ausgebildeten Abschnitt. Der Betätigungsabschnitt ist bevorzugt mindestens dreimal, insbesondere mindestens fünfmal so lang wie der Anpressabschnitt, wodurch eine günstige Hebelwirkung bereitgestellt sein kann. Der Anpressabschnitt ist in Längsrichtung versetzt zu dem ersten Lagerelement angeordnet und durch die Schwenkbewegung in Längsrichtung neben dem ersten Lagerelement bewegbar und drückt in der ersten Position des Schwenkhebels mit einer Anpressseite auf eine Oberfläche des ersten Führungsabschnitts und hemmt dabei die Verschiebung des Schlittens relativ zur Schiene und ist in der zweiten Position des Schwenkhebels von der Oberfläche des Führungsabschnitts gelöst. Indem der Anpressabschnitt in Längsrichtung versetzt zu dem ersten Lagerelement, d. h**.** zumindest versetzt zu in dem ersten Lagerelement vorgesehenen Durchführung, angeordnet ist, kann der Anpressabschnitt mit seiner Anpressseite gegen die Oberfläche des Führungsabschnitts pressen. Während in der ersten Position durch das Drücken der Anpressseite gegen die Oberfläche des ersten Führungsabschnitts der Schwenkhebel und somit der gesamte Schlitten relativ zur Schiene verklemmt ist, ist in der zweiten Position der Anpressabschnitt mit seiner Anpressseite von der Oberfläche des Führungsabschnitts gelöst, d. h**.** er steht nicht in einem Form- oder Reibschluss mit der Oberfläche des ersten Führungsabschnitts. Der Schwenkhebel ist bevorzugt durch das Lager mit seiner Schwenkachse in Längsrichtung positionsfest relativ zu den Lagerelementen und zu dem Schlittenkörper fixiert. Der Schenkhebel ist bevorzugt als starrer Körper, insbesondere nach Art eines Stabs, ausgebildet. Bevorzugt ist der Halteabschnitt, an dem das Lager gehalten ist, in Längsrichtung versetzt zu dem ersten Lagerelement angeordnet. Bevorzugt ist die Schwenkachse in Längsrichtung zu dem ersten Lagerelement versetzt angeordnet. Der Halteabschnitt ist starr mit dem Schlittenkörper und dem ersten Lagerelement verbunden.

Besonders bevorzugt weist der Schlitten ein zweites Lagerelement auf, das in Längsrichtung von dem ersten Lagerelement beabstandet an dem Schlittenkörper angeordnet ist und ebenfalls dem ersten Führungsabschnitt zugeordnet ist, wobei der Anpressabschnitt in Längsrichtung zwischen erstem und zweitem Lagerelement vorgesehen ist und der Anpressabschnitt durch eine Schwenkbewegung zwischen den beiden in Längsrichtung beabstandeten Lagerelementen bewegbar ist. Durch die Anordnung des Anpressabschnitts in Längsrichtung zwischen den beiden Lagerelementen kann eine besonders gute Kraftaufnahme durch die Lagerelemente in Querrichtung gewährleistet sein, wenn der Schwenkhebel von der zweiten in die erste Position durch eine zur Schwenkbewegung inversen Schwenkbewegung gebracht wird. Bevorzugt ist der Halteabschnitt, insbesondere die Schwenkachse in Längsrichtung zwischen erstem und zweitem Lagerelement angeordnet.

Bevorzugt ist die Oberfläche des ersten Führungsabschnitts, an die die Anpressseite des Schwenkhebels in der ersten Position drückt, eine in Querrichtung weisende Längsseite des Führungsabschnitts, die von dem anderen der Führungsabschnitte weg weist. Somit presst die Anpressseite von außen, bevorzugt in Querrichtung, in der ersten Position gegen die Oberfläche des Führungsabschnitts. Besonders bevorzugt ist die Schwenkachse in Querrichtung außerhalb der Schiene angeordnet. Durch das Anordnen der Schwenkachse in Querrichtung außerhalb der Schiene und/oder durch das Pressen gegen die in Querrichtung weisende Längsseite des ersten Führungsabschnitts, die von dem zweiten Führungsabschnitt weg weist, kann eine besonders einfache, effiziente und gut regulierbare Kraftaufbringung durch den Schwenkhebel auf die Oberfläche des ersten Führungsabschnitts gewährleistet sein.

Besonders bevorzugt ist der Schwenkhebel in der ersten Position senkrecht zum ersten Führungsabschnitt ausgerichtet und in der zweiten Position parallel zum ersten Führungsabschnitt ausgerichtet, wobei jeweils auf die Zylinderachse des zylindrisch ausgestalteten ersten Führungsabschnitts abgestellt ist. Dies kann zum einen eine besonders einfache Kraftaufbringung auf den Schwenkhebel und eine besonders einfache Zugänglichkeit des Schwenkhebels mit sich bringen, zum anderen eine besonders einfache Markierung der beiden Positionen.

Es wurde festgestellt, dass die Verklemmung des Schlittens mit der Schiene anstatt zum Schienenkörper auch von außen zum Führungsabschnitt erfolgen kann. Dadurch bleibt die Gestaltungsfreiheit für den Schienenkörper erhalten, sodass auch besonders flache Bauformen möglich sind, weil keine Ausnehmung für einen Klemmkörper erforderlich ist.

Die Erfindung lässt sich bei allen gattungsgemäßen Gleitlageranordnungen anwenden, insbesondere wenn die in den Durchführungen angebrachten Gleitelemente aus einem Gleitkunststoff bestehen. Möglich ist aber auch die Anwendung herkömmlicher Kugellagerbuchsen.

Unter einem Gleitkunststoff ist hier ein polymerer Werkstoff zu verstehen, der einen geringen Reibungskoeffizienten zur Oberfläche des Führungsabschnitts aufweist. Insbesondere zählen dazu die Thermoplaste Polyethen, Polypropylen, Polyacetal, Polycarbonat, Polyamid, Polyvinylchlorid, Polytetrafluorethen sowie bei den Duroplasten Phenolharze. Zur weiteren Verminderung der Reibung können diese Kunststoffe feinteilige Feststoffschmiermittel wie Molybdändisulfid oder Graphit enthalten. Solche Polymere werden auch als Tribopolymere bezeichnet. Da mit der Reibung auch der Verschleiß und auch der Abrieb geringer wird, sind diese Produkte besonders angebracht, wenn es auf hohe Reinheit ankommt, wie beispielsweise in der Lebensmittel- und Halbleiterindustrie, sowie bei biochemischen und mikrobiologischen Anwendungen. Die polymeren Werkstoffe können ferner Füllstoffe und Faserstoffe, zum Beispiel aus Kunststoff oder Textil, zur Verbesserung der mechanischen Eigenschaften enthalten.

Im Verbindungsbereich kann der zylindrische Führungsabschnitt unmittelbar in den Schienenkörper übergehen oder auch als beide Teile verbindender Steg gestaltet sein. Um die Linearbewegung der Lagerelemente auf den Führungsabschnitten der Schiene zu ermöglichen, weist die zylindrische Durchführung des Lagerelements einen Längsspalt im Zylindermantel auf, durch den der Verbindungsbereich zwischen Schienenkörper und Führungsabschnitt hindurchtreten kann. Wenn dieser Spalt breit genug ist, kann er auch zur Montage der einzelnen Lagerelemente auf den Führungsabschnitten durch Aufstecken von der Seite her dienen, wobei die Lagerelemente nach diesem Montageschritt fest mit dem Schlittenkörper verbunden werden, sodass sie nicht von den Führungsabschnitten abfallen können.

Die Lagerelemente befinden sich bevorzugt, insbesondere in der Nähe der Ecken, an der der Schiene zugewandten Seite des Schlittenkörpers. Während auf der Seite des Schlittenkörpers, auf der sich der Halteabschnitt für die Schwenkachse befindet, schon aus Raumgründen bevorzugt zwei Lagerelemente vorgesehen sind, um zwischen sich Raum für die Bewegung des kurzen Abschnitts des Schwenkhebels freizugeben, kann beispielsweise auf der anderen Seite des Schlittenkörpers bevorzugt auch nur ein Lagerelement vorgesehen sein.

Der Halteabschnitt des Schlittenkörpers ist bevorzugt als Vorsprung ausgebildet, beispielsweise als Dreieck, Viereck oder Trapez oder mit einer bogenförmigen Begrenzung, wobei er so ausgestaltet ist, dass das Schwenklager sich an der richtigen Stelle befindet und die Stabilität gewährleistet ist. Der Halteabschnitt ist vorzugsweise einstückig mit dem Schlittenkörper ausgebildet. Er kann aber auch als gesondertes Bauteil nachträglich mit dem Schlittenkörper und/oder zumindest einem der Lagerelemente, insbesondere mit beiden, dem ersten Führungsabschnitt zugeordneten Lagerelementen verbunden werden, was ein Nachrüsten bestehender Gleitlageranordnungen zu einer Ausführungsform der Erfindung ermöglichen kann.

Der Druck des kurzen Abschnitts des Schwenkhebels auf den ersten Führungsabschnitt kann durch unmittelbare Berührung erfolgen. Bei einer bevorzugten Ausführungsform ist in der Querrichtung zwischen dem Anpressabschnitt des Schwenkhebels und der Oberfläche des Führungsabschnitts ein elastisches Element vorgesehen ist. Das elastische Element kann beispielsweise an dem Schlittenkörper und/oder dem ersten Lagerelement, insbesondere an erstem und zweitem Lagerelement befestigt sein und erstreckt sich in Längsrichtung über den Anpressabschnitt hinweg zwischen dem Anpressabschnitt und der genannten Oberfläche des ersten Führungsabschnitts. Bevorzugt ist das elastische Element an den beiden in Längsrichtung beabstandeten Lagerelementen, zwischen denen der Anpressabschnitt angeordnet ist, befestigt und überspannt den Raum zwischen den Lagerelementen und die Anpressseite des Anpressabschnitts des Schwenkhebels. Durch das Vorsehen des elastischen Elements wird es möglich, ein Untermaß zwischen der Anpressseite des Schwenkhebels und der Oberfläche des Führungsabschnitts auszugleichen. Durch das Befestigen des elastischen Elements an erstem und zweitem Lagerelement dergestalt, dass es in der zweiten Position des Schwenkhebels von der Oberfläche des Führungsabschnitts beabstandet ist, kann eine besonders vorteilhafte elastische Wirkung erzielt werden. Durch ein geringes geplantes Untermaß kann vermieden werden, dass ein Übermaß auftritt und der Schwenkhebel nur mit großer Kraft in die erste Position bewegt werden kann, was wiederum eine Gefahr von Bruch und/oder Abrieb bedeuten würde.

Bevorzugt ist auch eine Ausführungsform, bei der das elastische Element an der Anpressseite am Anpressabschnitt des Schwenkhebels befestigt ist.

Das elastische Element ist bevorzugt aus einem Elastomer hergestellt und kann die Form einer Folie haben. Geeignet sind beispielsweise Ethylen-Propylen-Dien-Copolymere und Styrol-Butadien-Kautschuk. Vorteilhaft umfasst dieses Elastomer einen reibungserhöhenden Zusatz, beispielsweise Siliziumdioxid oder Glasmikrokugeln. Dieser Zusatz kann in einer dem Führungsabschnitt zugewandten Oberflächenschicht oder aber auch im gesamten Volumen des elastischen Elements vorhanden sein.

Allgemein bevorzugt ist das elastische Element dergestalt an dem ersten und insbesondere dem zweiten Lagerelement und/oder an dem Schlittenkörper befestigt, dass es sich in der zweiten Position in einer Ausgangslage befindet und durch den Anpressabschnitt des Schwenkhebels während der Schwenkbewegung elastisch ausgelenkt wird, bis der Anpressabschnitt das elastische Element in der ersten Position gegen die Oberfläche des ersten Führungsabschnitts presst. In der ersten Position übt somit das elastische Element bevorzugt eine Rückstellkraft entlang der Querrichtung gegen den Anpressabschnitt des Schwenkhebels aus. Bei der Schwenkbewegung von der ersten Position zur zweiten Position löst sich das elastische Element aufgrund der elastischen Rückstellkraft bevorzugt von der Oberfläche des ersten Führungsabschnitts, während der Schwenkhebel von der ersten in die zweite Position bewegt wird.

Das Material des Schlittens, also des Schlittenkörpers und der Lagerelemente, kann ein Metall, bevorzugt ein Leichtmetall wie Aluminium oder Titan oder ein Kunststoff, bevorzugt ein Thermoplast, besonders bevorzugt aus der oben genannten Gruppe der Gleitkunststoffe, sein. Im letzteren Fall können die Lagerelemente vollständig aus dem Gleitkunststoff bestehen. Es ist auch vorzugsweise möglich, in den Lagerelementen aus Kunststoff getrennte Gleitelemente aus Gleitkunststoff oder Tribopolymer vorzusehen. Solche Gleitelemente sind auf der Innenfläche der zylindrischen Durchführung angeordnet und füllen so den Spalt zwischen dem Führungsabschnitt und dem Körper des Lagerelements aus und bilden dabei eine Gleitanlagefläche, an der der in der Durchführung aufgenommene Führungsabschnitt anliegt.

Bevorzugt werden die Lagerelemente lösbar, insbesondere mit Schrauben, am Schlittenkörper befestigt. Dies kann geschehen, nachdem sie auf die Führungsabschnitte von deren Enden her aufgeschoben worden sind. Alternativ ist es auch möglich, die Lagerelemente einstückig mit dem Schlittenkörper, wahlweise auch mit dem Halteabschnitt bzw. Vorsprung, auszuführen, wenn die Bedingungen der Montage dies erlauben. Vorgesehene Gleitelemente können durch Einsatzspritzgießen in die Lagerelemente, gegebenenfalls auch in den entsprechenden Abschnitt des einstückigen Schlittens, oder durch Einführen eines zuvor gefertigten Gleitelements integriert werden.

Vorzugsweise weisen die zylindrischen Durchführungen in den Lagerelementen eine spaltförmige Öffnung im Zylindermantel in dessen Längsrichtung auf. Diese kann so breit sein, dass die Lagerelemente von der Seite auf die Führungsabschnitte aufgesteckt werden können, sodass eine Montage von deren Ende her nicht notwendig ist.

Vorzugsweise sind die Führungsabschnitte einstückig mit dem Schienenkörper ausgebildet. Wenn die Gleitschienenanordnung auf einer ebenen Fläche oder auf Querträgern, deren tragende Flächen in einer Ebene liegen, montiert werden soll, sind die Achsen der Führungsabschnitte bevorzugt in Richtung von der ebenen Fläche weg versetzt, damit die auf die Führungsabschnitt der aufgesteckten Lagerelemente von der ebenen Fläche bewegungsfähig beabstandet sind. Andernfalls ist es auch möglich, die Führungsabschnitte der gleichen Höhe wie den Schienenkörper vorzusehen, was eine besonders flache Bauweise ermöglicht.

Um die manuelle Bedienung des Schwenkhebels zu erleichtern, ist der lange Abschnitt des Schwenkhebels in der Nähe seines Endes mit einem Handgriff versehen, damit er einfach von einem Benutzer mit der ganzen Hand gegriffen werden kann. Dieser kann beispielsweise aus einem elastischen Material gefertigt, auf den Schwenkhebel aufsteckbar und mit einer profilierten Oberfläche versehen oder auch einstückig an den Schwenkhebel angeformt sein.

Um die Berührungsfläche zwischen dem kurzen Abschnitt des Schwenkhebels und der Zylinderfläche des Führungsabschnitts zu vergrößern, kann vorteilhaft die Anpressseite mit einer an die für die Berührung infrage kommende Zylinderfläche des ersten Führungsabschnitts angepassten Hohlkehle versehen sein. Auch in diesem Falle ist bevorzugt ein elastisches Element zwischen dem Ende des Schwenkhebels und der Zylinderfläche des Führungsabschnitts angeordnet.

Gegenüber den bekannten Vorrichtungen zeichnet sich der Erfindungsgegenstand dadurch aus, dass der lange Arm des Schwenkhebels leicht mit einer Hand ergriffen und bedient werden kann. Der Betriebszustand der Bremse ist auch aus größerer Entfernung leicht zu erkennen, weil bei aktivierter Bremse der Schwenkhebel eine vordefinierte Position innehat, insbesondere von der Gleitschienenanordnung seitlich absteht. Andererseits ist bei gelöster Bremse der Schwenkhebel in einer vordefinierten zweiten Position, insbesondere nahe an die Gleitschienenanordnung angelegt, und behindert die Verschiebung der auf dem Schlittenkörper montierten Aggregate nicht.

Die Erfindung betrifft ferner einen Schlitten für eine erfindungsgemäße Gleitlageranordnung. Der Schlitten ist korrespondierend zu einer Schiene ausgebildet, die einen sich in einer Längsrichtung erstreckenden Schienenkörper aufweist, an dem zwei sich in der Längsrichtung erstreckende und in einer Querrichtung voneinander beabstandete zylindrische Führungsabschnitte vorgesehen sind, die jeweils über einen Verbindungsbereich mit dem Schienenkörper verbunden sind. Der Schlitten weist einen sich in Querrichtung erstreckenden Schlittenkörper auf, an dem Lagerelemente vorgesehen sind, von denen zumindest eines einem ersten der Führungsabschnitte zugeordnet ist und zumindest ein weiteres einem zweiten der Führungsabschnitte zugeordnet ist, wobei die Lagerelemente jeweils eine zu dem ihnen zugeordneten Führungsabschnitt korrespondierende zylindrische Durchführung mit einem Längsspalt zum Durchlassen des Verbindungsbereichs aufweisen, wobei in den Durchführungen Gleitelemente angeordnet sind, die in der jeweiligen Durchführung eine Gleitanlagefläche ausbilden, die in bestimmungsgemäßer Einbaulage, d. h**.** bei Verwendung in einer erfindungsgemäßen Gleitlageranordnung, an dem jeweils zugeordneten Führungsabschnitt anliegt. Erfindungsgemäß ist ein erstes der Lagerelemente dazu ausgebildet, in der Einbaulage in seine Durchführung den ersten Führungsabschnitt aufzunehmen. Der Schlitten weist einen in Längsrichtung zu dem ersten Lagerelement versetzten Halteabschnitt auf, der mit einem Lager versehen ist, in dem die Schwenkachse eines Schwenkhebels gelagert ist. Der Schwenkhebel ist mit einer Schwenkbewegung um mindestens 45°, insbesondere mindestens 60°, insbesondere um 90° um die Schwenkachse aus einer ersten Position in eine zweite Position schwenkbar. Der Schwenkhebel weist an einer Seite der Schwenkachse einen kurzen, als Anpressabschnitt ausgebildeten Abschnitt auf, und an der anderen Seite der Schwenkachse einen langen, als Betätigungsabschnitt ausgebildeten Abschnitt. Der Anpressabschnitt ist durch die Schwenkbewegung in Längsrichtung neben dem ersten Lagerelement bewegbar und drückt in der ersten Position mit einer Anpressseite in der Einbaulage auf eine Oberfläche des ersten Führungsabschnitts und hemmt die Verschiebung des Schlitten relativ zur Schiene bei der bestimmungsgemäßen Einbaulage, während er in der zweiten Position in der Einbaulage von der Oberfläche des Führungsabschnitts gelöst ist. Besonders bevorzugt ist die Schwenkachse in Querrichtung außerhalb der Durchführung des ersten Lagerelements angeordnet und an einer Seite dieser Durchführung angeordnet, die in Querrichtung von dem dem zweiten Führungsabschnitt zugeordneten weiteren Lagerelement weg weist. Die Schwenkachse ist somit sowohl in Querrichtung als auch in Längsrichtung außerhalb der Durchführung des ersten Lagerelements angeordnet und bevorzugt außerhalb der Erstreckung des Schlittenkörpers in Querrichtung angeordnet.

Der Schlitten kann weitere Merkmale aufweisen, die im Zusammenhang mit einer erfindungsgemäßen Gleitlageranordnung beschrieben sind. Ferner kann eine erfindungsgemäße Gleitlageranordnung und kann eine erfindungsgemäßer Schlitten Merkmale aufweisen, die im Zusammenhang mit gattungsgemäßen Gleitlageranordnungen bzw. Schlitten beschrieben sind.

Die Erfindung ist vielseitig anwendbar. Beispiele sind der Fahrzeugbau insbesondere von Nutzfahrzeugen wie Traktoren und Reinigungsfahrzeugen, bei denen der Sitz des Fahrers und auch die Bedienelemente des Cockpits einmal links, ein anderes Mal rechts angeordnet sein sollen, um dem Fahrer einen ungehinderten Blick auf den Arbeitsbereich zu ermöglichen. Sitz und Bedienelemente sind dann sehr leicht von links nach rechts und zurück zu verschieben. Auch die Verstellung von Mittelarmlehnen in Fahrzeugen ist mit der erfindungsgemäßen Vorrichtung leicht möglich. Schließlich sei noch die Verstellung von Wandtafeln in Höhe und Breite erwähnt. Auch in Fertigungsstraßen der verarbeitenden Industrie kann die Erfindung angewendet werden, beispielsweise, wenn es darauf ankommt, in einer Fertigungslinie ein Werkzeug gegen ein anderes auszutauschen.

Eine bevorzugte Ausführung (siehe Anspruch 8) der Erfindung wird nun anhand der beigegebenen Zeichnungen eingehend erläutert.

Es zeigen:
- Figur 1:: in einer schematischen Prinzipdarstellung eine Untersicht einer Ausführungsform der erfindungsgemäßen Gleitlageranordnung in der ersten Position des Schwenkhebels;
- Figur 2:: in einer schematischen Prinzipdarstellung eine Draufsicht der Ausführungsform gemäß Figur 1 in der zweiten Position des Schwenkhebels;
- Figur 3:: in einer schematischen Prinzipdarstellung eine Untersicht der Ausführungsform gemäß Figur 1 in der ersten Position des Schwenkhebels;
- Figur 4:: in einer schematischen Prinzipdarstellung einen Schnitt durch die Ausführungsform gemäß Figur 1 längs der Linie A - A in Figur 3.

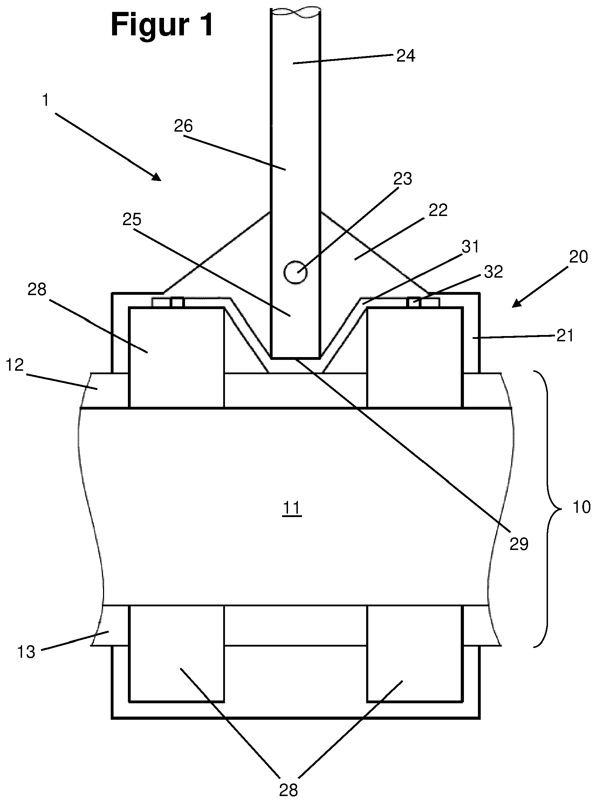

In Figur 1 erkennt man eine erfindungsgemäße Gleitlageranordnung 1 mit einer Schiene 10 und einem Schlitten 20. Die Schiene 10 weist einen Schienenkörper 11 auf, an den sich seitlich Führungsabschnitte 12, 13 mit zylindrischem Querschnitt anschließen und längs mit dem Schienenkörper 11 erstrecken. Auf der Schiene 10 ist der Schlitten 20 verschiebbar angeordnet (in der Ebene der Figur von rechts nach links und zurück). In dieser Ansicht sieht man den im Wesentlichen rechteckigen Schlittenkörper 21 mit einem als im Wesentlichen dreieckigen Vorsprung ausgebildeten Halteabschnitt 22, in dem in einer Bohrung die Schwenkachse 23 des Schwenkhebels 24 untergebracht ist, welche den Schwenkhebel 24 in einen kurzen Abschnitt 25 und einen langen Abschnitt 26 teilt. Diese Schwenkachse 23 kann beispielsweise durch eine Schraube mit Mutter oder einen Niet realisiert sein. Die hier nicht sichtbare Oberseite des Schlittenkörpers 21 steht zur Aufnahme der durch die Gleitlageranordnung zu bewegenden Aggregate zur Verfügung. An der Unterseite des Schlittenkörpers 21 sind Lagerelemente 28 (in diesem Fall vier) jeweils nahe den Ecken des Schlittenkörpers 21 befestigt, beispielsweise von der Oberseite des Schlittenkörpers 21 her mit hier nicht sichtbaren Schrauben. Diese Lagerelemente 28 umgreifen mit zylinderförmigen Durchführungen die Führungsabschnitte 12, 13 sodass sie auf diesen gleiten können. Die zylinderförmigen Durchführungen der Lagerelementen 28 sind mit hier nicht sichtbaren Gleitelementen ausgekleidet. Damit ist der ganze Schlitten gleitfähig auf der Schiene 10 befestigt. In dieser Darstellung ist der Schwenkhebel 24 in der ersten Position, d. h. vorliegend senkrecht zum ersten Führungskörper 12 ausgerichtet. Der Schwenkhebel weist einen kurzen Abschnitt 25 und einen langen Abschnitt 26 auf, die an der Schwenkachse zusammentreffen.

Zwischen den dem ersten Führungsabschnitt 12 zugeordneten Lagerelementen 28 ist ein elastisches Element 31 aufgespannt, das an den Lagerelementen befestigt ist, hier mit versenkten Schrauben 32. Dieses elastische Element 31 überspannt die Stirnfläche 29 des kurzen Abschnitts 25 des Schwenkhebels 24 und wird von diesem an den ersten Führungsabschnitt 12 gepresst, sodass der Schlitten 20 gegen eine Verschiebung auf der Schiene 10 gesichert ist.

Schon an dieser Figur wird deutlich, dass diese Sicherung des Schlittens 20 aufgehoben werden kann, wenn der Schwenkhebel 24 in Richtung auf die zweite Position bewegt wird. Dann löst sich nämlich die Anpressseite 29 des kurzen Abschnitts 25 des Schwenkhebels 24 vom elastischen Element 31, wegen dessen Elastizität löst es sich vom ersten Führungsabschnitt 12, und der Schlitten 10 ist nun beweglich.

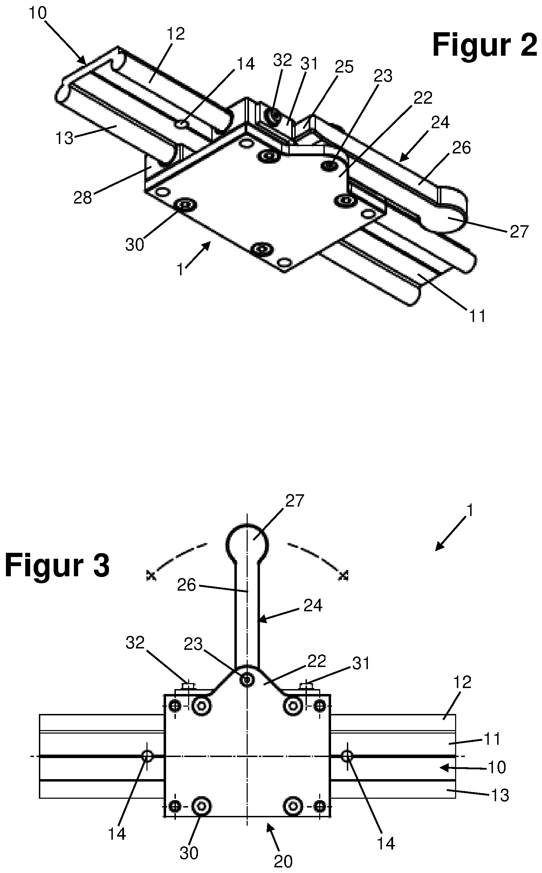

In der Draufsicht der Figur 2 ist die Gleitschiene 10 nun unter dem Schlitten 20 dargestellt. Die Gleitschiene 10 zeigt wiederum den Schienenkörper 11 sowie den ersten Führungsabschnitt 12 und den zweiten Führungsabschnitt 13. Der Schlittenkörper zeigt die Befestigungsschrauben 30 für die an seiner Unterseite angebrachten Lagerelemente 28 und den als Vorsprung 22 ausgebildeten Halteabschnitt mit dem Schwenklager 23. Der Schwenkhebel 24 befindet sich nun in der zweiten Position, in der er parallel zur Gleitschiene 10 ausgerichtet ist. In dieser Position berührt sein kurzer Abschnitt 25 den ersten Führungsabschnitt 12 nicht, und der Schlitten 20 kann auf der Gleitschiene 10 verschoben werden. Weil der Schwenkhebel 24 nun nahe bei der Gleitschiene liegt, kann die Bewegung des Schlittens 20 nicht durch etwaige Hindernisse in der Nähe der Schiene 10 aufgehalten werden. Die Schraubenlöcher 14 dienen der Befestigung des Schienenkörpers 11 auf einem nicht dargestellten Träger. Das elastische Element 31 ist hier teilweise von dem Schlittenkörper 21 mit dem Halteabschnitt 22 verdeckt. Seine Enden sind mit versenkten Schrauben auf dem Schlittenkörper befestigt.

Figur 3 zeigt die erfindungsgemäße Gleitschienenanordnung in der ersten Position des Schwenkhebels 24, d. h**.** mit Blockierung des Schlittens 20 an der Gleitschiene 10. Hierbei weist der Schwenkhebel 24 senkrecht von der Gleitschiene 20 weg, sodass die blockierte Stellung der Gleitschienenanordnung sofort auch aus einer gewissen Entfernung erkennbar ist.

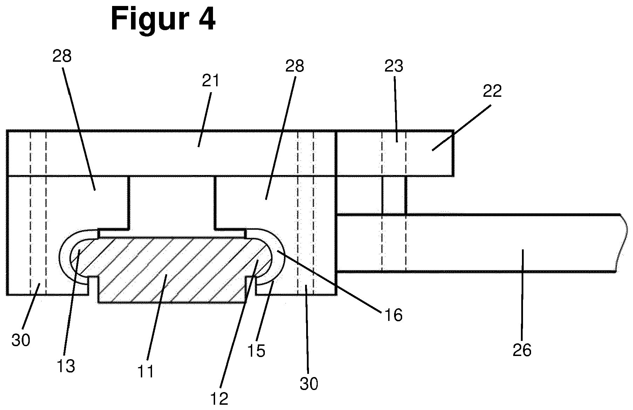

Figur 4 ist eine Seitenansicht der erfindungsgemäßen Gleitschienenanordnung, wie sie sich durch einen Schnitt längs der Linie A - A in Figur 3 ergibt, wobei der Schlitten 20 in einer Seitenansicht dargestellt ist. Man erkennt die am Schlittenkörper 21 durch Schrauben 30 befestigten Lagerelemente 28 mit ihren zylindrischen Durchführungen 15. In diesen sind die am Schienenkörper 11 angeformten korrespondierenden zylindrischen Führungsabschnitte 12, 13 gelagert, wobei die Oberfläche der Durchführungen mit Gleitkörpern 16 zur Verminderung der Reibung und des Verschleißes versehen sind. Der Schlittenkörper 21 ist mit dem Halteabschnitt bzw. Vorsprung 22 versehen, in dem sich das Schwenklager 23 für den Schwenkhebel 24 befindet, von dem hier der lange Abschnitt 26 von der Gleitschienenanordnung nach rechts hinweg weist.

### Bezugszeichenliste

- 1: Gleitschienenanordnung
- 10: Schiene
- 11: Schienenkörper
- 12: erster Führungsabschnitt
- 13: zweiter Führungsabschnitt
- 14: Schraubenlöcher
- 15: Durchführung
- 16: Gleitelement
- 20: Schlitten
- 21: Schlittenkörper
- 22: Halteabschnitt
- 23: Schwenkachse
- 24: Schwenkhebel
- 25: kurzer Abschnitt des Schwenkhebels
- 26: langer Abschnitt des Schwenkhebels
- 27: Handgriff
- 28: Lagerelemente
- 29: Anpressseite des kurzen Abschnitts
- 30: Schrauben zur Befestigung der Lagerelemente
- 31: elastisches Element
- 32: Schrauben

## Patentansprüche

1. Gleitlageranordnung (1) umfassend eine Schiene (10) und einen Schlitten (20), wobei die Schiene (10) einen sich in einer Längsrichtung (X) erstreckenden Schienenkörper (11) aufweist, an dem zwei sich in der Längsrichtung (X) erstreckende und in einer Querrichtung voneinander beabstandete zylindrische Führungsabschnitte (12, 13) vorgesehen sind, die jeweils über einen Verbindungsbereich mit dem Schienenkörper (11) verbunden sind, wobei der Schlitten (20) einen sich in Querrichtung entlang des Schienenkörpers (11) erstreckenden Schlittenkörper (21) umfasst, an dem Lagerelemente (28) vorgesehen sind, von denen zumindest eines einem ersten der Führungsabschnitte (12) zugeordnet ist und zumindest ein weiteres einem zweiten der Führungsabschnitte (13) zugeordnet ist, wobei die Lagerelemente (28) jeweils eine zu dem ihnen zugeordneten Führungsabschnitt (12, 13) korrespondierende zylindrische Durchführung (15) mit einem Längsspalt zum Durchlassen des Verbindungsbereichs aufweisen, wobei in den Durchführungen (15) Gleitelemente (16) angeordnet sind, die in der jeweiligen Durchführung (15) eine Gleitanlagefläche ausbilden, die in Einbaulage an dem jeweils zugeordneten Führungsabschnitt (12, 13) anliegt,
**dadurch gekennzeichnet, dass**
ein erstes der Lagerelemente (28) dem ersten Führungsabschnitt (12) zugeordnet ist, wobei der Schlitten (20) einen Halteabschnitt (22) aufweist, der mit einem Lager (23) versehen ist, in dem die Schwenkachse (23) eines Schwenkhebels (24) gelagert ist, wobei der Schwenkhebel (24) mit einer Schwenkbewegung um mindestens 45° um die Schwenkachse aus einer ersten Position in eine zweite Position schwenkbar ist, wobei der Schwenkhebel (24) an einer Seite der Schwenkachse (23) einen kurzen, als Anpressabschnitt ausgebildeten Abschnitt (25) aufweist und an der anderen Seite der Schwenkachse (23) einen langen, als Betätigungsabschnitt ausgebildeten Abschnitt aufweist, wobei der Anpressabschnitt (25) in Längsrichtung versetzt zu dem ersten Lagerelement (28) angeordnet ist und durch die Schwenkbewegung in Längsrichtung neben dem ersten Lagerelement (28) bewegbar ist und in der ersten Position mit einer Anpressseite (29) auf eine Oberfläche des ersten Führungsabschnitts (12) drückt und die Verschiebung des Schlittens hemmt und in der zweiten Position von der Oberfläche des ersten Führungsabschnitts (12) gelöst ist.

2. Gleitlageranordnung (1) nach Anspruch 1,
**dadurch gekennzeichnet, dass**
ein zweites der Lagerelemente (28) in Längsrichtung (X) von dem ersten Lagerelement (28) beabstandet an dem Schlittenkörper (21) angeordnet ist und ebenfalls dem ersten Führungsabschnitte (12) zugeordnet ist, wobei der Anpressabschnitt (25) in Längsrichtung (X) zwischen erstem und zweitem Lagerelement (28) vorgesehen ist und der Anpressabschnitt (25) durch die Schwenkbewegung zwischen den beiden in Längsrichtung beabstandeten Lagerelementen bewegbar ist.

3. Gleitlageranordnung (1) nach einem der vorangehenden Ansprüche,
**dadurch gekennzeichnet, dass**
die Oberfläche des ersten Führungsabschnitts (12) eine in Querrichtung weisende Längsseite des ersten Führungsabschnitts (12) ist, die von dem zweiten Führungsabschnitt (13) weg weist, wobei insbesondere in der ersten Position die Anpressseite (29) in Querrichtung gegen die Oberfläche presst.

4. Gleitlageranordnung (1) nach einem der vorangehenden Ansprüche,
**dadurch gekennzeichnet, dass**
die Schwenkachse in Querrichtung außerhalb der Schiene (10) angeordnet ist.

5. Gleitlageranordnung (1) nach einem der vorangehenden Ansprüche,
**dadurch gekennzeichnet, dass**
der Schwenkhebel (24) in der ersten Position senkrecht zum ersten Führungsabschnitt (12) ausgerichtet ist und in der zweiten Position parallel zum ersten Führungsabschnitt (12) ausgerichtet ist.

6. Gleitlageranordnung (1) nach einem der vorangehenden Ansprüche,
**dadurch gekennzeichnet, dass**
die Gleitelemente (16) durch einen Gleitkunststoff, bevorzugt ein tribologisches Polymer, gebildet sind.

7. Gleitlageranordnung (1) nach einem der vorangehenden Ansprüche,
**dadurch gekennzeichnet, dass**
die Gleitelemente (16) nach Art eines, insbesondere durch einen entlang der Längsrichtung durchlaufenden Schlitz unterbrochenen, Hohlzylinders ausgebildet sind.

8. Gleitlageranordnung (1) nach einem der vorangehenden Ansprüche,
**dadurch gekennzeichnet, dass**
in der Querrichtung zwischen dem Anpressabschnitt (25) des Schwenkhebels (24) und der Oberfläche des Führungsabschnitts ein elastisches Element (31) vorgesehen ist, das an der Anpressseite (29) des Schwenkhebels befestigt ist und/oder zumindest an dem Schlittenkörper (21) oder dem ersten Lagerelement (28) befestigt ist und sich von diesem in Längsrichtung über den Anpressabschnitt (25) hinweg erstreckt, insbesondere den Raum zwischen erstem und zweitem Lagerelement (28) und den Anpressabschnitt (25) des Schwenkhebels (24) überspannt und an erstem und zweitem Lagerelement (28) befestigt ist.

9. Gleitlageranordnung (1) nach Anspruch 8,
**dadurch gekennzeichnet, dass**
das elastische Element eine Folie aus einem Elastomer umfasst.

10. Gleitlageranordnung nach einem der vorangehenden Ansprüche,
**dadurch gekennzeichnet, dass**
die Lagerelemente lösbar, insbesondere durch Schrauben, mit dem Schlittenkörper verbunden sind.

11. Gleitlageranordnung (1) nach einem der vorangehenden Ansprüche,
**dadurch gekennzeichnet, dass**
die Führungsabschnitte einstückig mit dem Schienenkörper ausgebildet sind.

12. Gleitlageranordnung (1) nach einem der vorangehenden Ansprüche,
**dadurch gekennzeichnet, dass**
die Schiene aus einem Metall oder einem Kunststoff besteht.

13. Gleitlageranordnung (1) nach einem der vorangehenden Ansprüche,
**dadurch gekennzeichnet, dass**
Betätigungsabschnitt des Schwenkhebels mit einem Handgriff versehen ist.

14. Gleitlageranordnung (1) nach einem der vorangehenden Ansprüche,
**dadurch gekennzeichnet, dass**
die Anpressseite (29) des Anpressabschnitts des Schwenkhebels mit einer Hohlkehle versehen ist, die an die Zylinderfläche des ersten Führungsabschnitts angepasst ist.

15. Schlitten (20) für eine Gleitlageranordnung (1) nach einem der vorangehenden Ansprüche, wobei der Schlitten (20) korrespondierend zu einer Schiene (10) ausgebildet ist, die einen sich in einer Längsrichtung (X) erstreckenden Schienenkörper (11) aufweist, an dem zwei sich in der Längsrichtung (X) erstreckende und in einer Querrichtung voneinander beabstandete zylindrische Führungsabschnitte (12, 13) vorgesehen sind, die jeweils über einen Verbindungsbereich mit dem Schienenkörper verbunden sind, wobei der Schlitten (20) einen sich in Querrichtung erstreckenden Schlittenkörper (21) umfasst, an dem Lagerelemente (28) vorgesehen sind, von denen zumindest eines einem ersten der Führungsabschnitte (12, 13) zugeordnet ist und zumindest ein weiteres einem zweiten der Führungsabschnitte zugeordnet ist, wobei die Lagerelemente (28) jeweils eine zu dem ihnen zugeordneten Führungsabschnitt (12, 13) korrespondierende zylindrische Durchführung (15) mit einem Längsspalt zum Durchlassen des Verbindungsbereichs aufweisen, wobei in den Durchführungen (15) Gleitelemente (16) angeordnet sind, die in der jeweiligen Durchführung eine Gleitanlagefläche ausbilden, die in bestimmungsgemäßer Einbaulage an dem jeweils zugeordneten Führungsabschnitt (12, 13) anliegt,
**dadurch gekennzeichnet, dass**
ein erstes der Lagerelemente (28) dazu ausgebildet ist, in der Einbaulage in seiner Durchführung (15) den ersten Führungsabschnitt (12, 13) aufzunehmen, wobei der Schlitten (20) in Längsrichtung (X) zu dem ersten Lagerelement (28) versetzt einen Halteabschnitt (22) aufweist, der mit einem Lager (23) versehen ist, in dem die Schwenkachse (23) eines Schwenkhebels (24) gelagert ist, wobei der Schwenkhebel (24) mit einer Schwenkbewegung um mindestens 45° um die Schwenkachse (23) aus einer ersten Position in eine zweite Position schwenkbar ist, wobei der Schwenkhebel (24) an einer Seite der Schwenkachse (23) einen kurzen, als Anpressabschnitt ausgebildeten Abschnitt (25) aufweist und an der anderen Seite der Schwenkachse einen langen, als Betätigungsabschnitt ausgebildeten Abschnitt (26) aufweist, wobei der Anpressabschnitt (25) durch die Schwenkbewegung in Längsrichtung neben dem ersten Lagerelement (28) bewegbar ist und in der ersten Position mit einer Anpressseite (29) in der Einbaulage auf eine Oberfläche des ersten Führungsabschnitts (12, 13) drückt und die Verschiebung des Schlittens (20) hemmt und in der zweiten Position in der Einbaulage von der Oberfläche des Führungsabschnitts (12, 13) gelöst ist.

16. Schlitten (20) nach Anspruch 15,
**dadurch gekennzeichnet, dass**
die Schwenkachse in Querrichtung außerhalb der Durchführung des ersten Lagerelements (28) angeordnet ist und an einer Seite dieser Durchführung (15) angeordnet ist, die in Querrichtung von dem dem zweiten Führungsabschnitt (12, 13) zugeordneten weiteren Lagerelement (28) weg weist.

## Claims

1. Sliding bearing arrangement (1) comprising a rail (10) and a carriage (20), wherein the rail (10) comprises a rail body (11) extending in a longitudinal direction (X), at which two cylindrical guide portions (12, 13) extending in the longitudinal direction (X) and spaced apart from one another in a transverse direction are provided, which guide portions each are connected to the rail body (11) by way of a connection region, wherein the carriage (20) comprises a carriage body (21) extending in the transverse direction along the rail body (11), at which carriage body bearing elements (28) are provided, of which at least one is associated with a first one of the guide portions (12) and at least one further one is associated with a second one of the guide portions (13), wherein the bearing elements (28) each comprise a cylindrical leadthrough (15), corresponding to the guide portion (12, 13) which is respectively associated with them, with a longitudinal gap to allow the connection region to pass through, wherein sliding elements (16) are arranged in the leadthroughs (15) which in the respective leadthrough (15) form a sliding contact face which in the mounting position lies against the guide portion (12, 13) associated therewith,
**characterized in that**
a first one of the bearing elements (28) is associated with the first guide portion (12), wherein the carriage (20) comprises a holding portion (22) which is provided with a bearing (23) in which the pivot spindle (23) of a pivot lever (24) is borne, wherein the pivot lever (24) is pivotable out of a first position into a second position with a pivoting movement through at least 45° about the pivot spindle, wherein the pivot lever (24) comprises at one side of the pivot spindle (23) a short portion (25) formed as a pressure application portion and at the other side of the pivot spindle (23) a long portion formed as an actuating portion, wherein the pressure application portion (25) is arranged offset in the longitudinal direction relative to the first bearing element (28) and, by the pivoting movement, is movable beside, with regard to the longitudinal direction, the first bearing element (28) and in the first position presses with a pressure application side (29) on a surface of the first guide portion (12) and inhibits the displacement of the carriage, and in the second position is detached from the surface of the first guide portion (12).

2. Sliding bearing arrangement (1) according to claim 1,
**characterized in that**
a second one of the bearing elements (28) is arranged on the carriage body (21) spaced apart from the first bearing element (28) in the longitudinal direction (X) and likewise is associated with the first guide portion (12), wherein the pressure application portion (25) is provided in the longitudinal direction (X) between the first and second bearing element (28) and the pressure application portion (25) is movable by the pivoting movement between the two bearing elements which are spaced apart in the longitudinal direction.

3. Sliding bearing arrangement (1) according to one of the preceding claims,
**characterized in that**
the surface of the first guide portion (12) is a longitudinal side, pointing in the transverse direction, of the first guide portion (12), which longitudinal side points away from the second guide portion (13), wherein in particular in the first position the pressure application side (29) presses against the surface in the transverse direction.

4. Sliding bearing arrangement (1) according to one of the preceding claims,
**characterized in that**
the pivot spindle is arranged in the transverse direction outside the rail (10).

5. Sliding bearing arrangement (1) according to one of the preceding claims,
**characterized in that**
the pivot lever (24) in the first position is oriented perpendicularly to the first guide portion (12) and in the second position is oriented parallel to the first guide portion (12).

6. Sliding bearing arrangement (1) according to one of the preceding claims,
**characterized in that**
the sliding elements (16) are formed by a low-friction plastics material, preferably a tribological polymer.

7. Sliding bearing arrangement (1) according to one of the preceding claims,
**characterized in that**
the sliding elements (16) are formed in the manner of a hollow cylinder, in particular one interrupted by a slot running through along the longitudinal direction.

8. Sliding bearing arrangement (1) according to one of the preceding claims,
**characterized in that**
in the transverse direction between the pressure application portion (25) of the pivot lever (24) and the surface of the guide portion an elastic element (31) is provided, which is fastened to the pressure application side (29) of the pivot lever and/or is fastened at least to the carriage body (21) or to the first bearing element (28) and extends from the latter in the longitudinal direction beyond the pressure application portion (25), in particular spans the space between the first and second bearing element (28) and the pressure application portion (25) of the pivot lever (24) and is fastened to the first and second bearing element (28).

9. Sliding bearing arrangement (1) according to claim 8,
**characterized in that**
the elastic element comprises a foil made of an elastomer.

10. Sliding bearing arrangement according to one of the preceding claims,
**characterized in that**
the bearing elements are connected detachably, in particular by screws, to the carriage body.

11. Sliding bearing arrangement (1) according to one of the preceding claims,
**characterized in that**
the guide portions are formed in one piece with the rail body.

12. Sliding bearing arrangement (1) according to one of the preceding claims,
**characterized in that**
the rail consists of a metal or a plastics material.

13. Sliding bearing arrangement (1) according to one of the preceding claims,
**characterized in that**
the actuating portion of the pivot lever is provided with a handle.

14. Sliding bearing arrangement (1) according to one of the preceding claims,
**characterized in that**
the pressure application side (29) of the pressure application portion of the pivot lever is provided with a fluting which is adapted to the cylinder face of the first guide portion.

15. Carriage (20) for a sliding bearing arrangement (1) according to one of the preceding claims, wherein the carriage (20) is formed corresponding to a rail (10) which comprises a rail body (11) extending in a longitudinal direction (X), at which two cylindrical guide portions (12, 13) extending in the longitudinal direction (X) and spaced apart from one another in a transverse direction are provided, which guide portions each are connected to the rail body by way of a connection region, wherein the carriage (20) comprises a carriage body (21) extending in the transverse direction, at which bearing elements (28) are provided, of which at least one is associated with a first one of the guide portions (12, 13) and at least one further one is associated with a second one of the guide portions, wherein the bearing elements (28) each comprise a cylindrical leadthrough (15), corresponding to the guide portion (12, 13) which is respectively associated with them, with a longitudinal gap to allow the connection region to pass through, wherein sliding elements (16) are arranged in the leadthroughs (15) and in the respective leadthrough form a sliding contact face which in the intended mounting position lies against the guide portion (12, 13) associated therewith,
**characterized in that**
a first one of the bearing elements (28) is formed to receive the first guide portion (12, 13) in its leadthrough (15) in the mounting position, wherein the carriage (20) comprises a holding portion (22) offset in the longitudinal direction (X) in relation to the first bearing element (28), which holding portion is provided with a bearing (23) in which the pivot spindle (23) of a pivot lever (24) is borne, wherein the pivot lever (24) is pivotable out of a first position into a second position with a pivoting movement through at least 45° about the pivot spindle (23), wherein the pivot lever (24) comprises at one side of the pivot spindle (23) a short portion (25) formed as a pressure application portion and at the other side of the pivot spindle a long portion (26) formed as an actuating portion, wherein the pressure application portion (25) is movable beside, with regard to the longitudinal direction, the first bearing element (28) by the pivoting movement and in the first position presses with a pressure application side (29) in the mounting position on a surface of the first guide portion (12, 13) and inhibits the displacement of the carriage (20), and in the second position in the mounting position is detached from the surface of the guide portion (12, 13).

16. Carriage (20) according to claim 15,
**characterized in that**
the pivot spindle is arranged in the transverse direction outside the leadthrough of the first bearing element (28) and is arranged at a side of this leadthrough (15) which points away in the transverse direction from the further bearing element (28) associated with the second guide portion (12, 13).

## Revendications

1. Agencement de palier lisse (1) comprenant un rail (10) et un chariot (20), le rail (10) présentant un corps de rail (11) s'étendant dans une direction longitudinale (X), sur lequel sont prévues deux sections de guidage cylindriques (12, 13) s'étendant dans la direction longitudinale (X) et espacées l'une de l'autre dans une direction transversale, qui sont reliées chacune au corps de rail (11) par l'intermédiaire d'une zone de liaison, le chariot (20) comprenant un corps de chariot (21) s'étendant dans la direction transversale le long du corps de rail (11), sur lequel sont prévus des éléments de palier (28) dont au moins un est associé à une première des sections de guidage (12) et au moins un autre est associé à un deuxième des sections de guidage (13), les éléments de palier (28) présentant chacun un passage cylindrique (15) correspondant au segment de guidage (12, 13) qui leur est associé, avec une fente longitudinale pour laisser passer la zone de liaison, des éléments de glissement (16) étant disposés dans les passages (15) qui forment dans le passage respectif (15) une surface d'appui coulissante qui, en position de montage, s'appuie contre la section de guidage respective associée (12, 13),
**caractérisé en ce**
**qu'**un premier des éléments de palier (28) est associé à la première section de guidage (12), le chariot (20) comporte une partie de retenue (22) qui est pourvue d'un palier (23) dans lequel est monté l'axe de pivotement (23) d'un levier pivotant (24), le levier pivotant (24) pouvant pivoter d'au moins 45° autour de l'axe de pivotement d'une première position dans une deuxième position, le levier pivotant (24) présentant, d'un côté de l'axe de pivotement (23), une partie courte (25) formée en tant que partie de pression et, de l'autre côté de l'axe de pivotement (23), une partie longue formée en tant que partie d'actionnement, la partie de pression (25) étant décalée dans le sens longitudinal par rapport au premier élément de palier (28) et peut être bougé à côté, par rapport à la direction longitudinale, du premier élément de palier (28) par le mouvement de pivotement et, dans la première position, appuie avec le côté de pression (29) sur une surface de la première section de guidage (12) et empêche le déplacement du chariot et, dans la deuxième position, est dégagée de la surface de la première section de guidage (12).

2. Agencement de palier lisse (1) selon la revendication 1,
**caractérisé en ce**
**qu'**un deuxième des éléments de palier (28) est disposé dans la direction longitudinale (X) à distance du premier élément de palier (28) sur le corps de chariot (21) et est également associé à la première section de guidage (12), la partie de pression (25) étant prévue dans la direction longitudinale (X) entre le premier et le deuxième élément de palier (28) et la partie de pression (25) étant mobile par le mouvement de pivotement entre les deux éléments de palier espacés dans la direction longitudinale.

3. Agencement de palier lisse (1) selon l'une quelconque des revendications précédentes,
**caractérisé en ce que**
la surface de la première section de guidage (12) est un côté longitudinal de la première section de guidage (12) orienté dans le sens transversal, qui est tourné à l'opposé de la deuxième section de guidage (13), le côté de pression (29) pressant en particulier dans la première position dans le sens transversal contre la surface.

4. Agencement de palier lisse (1) selon l'une quelconque des revendications précédentes,
**caractérisé en ce que**
l'axe de pivotement est disposé dans le sens transversal à l'extérieur du rail (10).

5. Agencement de palier lisse (1) selon l'une quelconque des revendications précédentes,
**caractérisé en ce que**
le levier pivotant (24) est orienté perpendiculairement à la première section de guidage (12) dans la première position et parallèlement à la première section de guidage (12) dans la deuxième position.

6. Agencement de palier lisse (1) selon l'une quelconque des revendications précédentes,
**caractérisé en ce que**
les éléments de glissement (16) sont formés par une matière plastique glissante, de préférence un polymère tribologique.

7. Agencement de palier lisse (1) selon l'une quelconque des revendications précédentes,
**caractérisé en ce que**
les éléments de glissement (16) sont réalisés à la manière d'un cylindre creux, interrompu en particulier par une fente s'étendant dans la direction longitudinale.

8. Agencement de palier lisse (1) selon l'une quelconque des revendications précédentes,
**caractérisé en ce que**,
dans la direction transversale entre la partie de pression (25) du levier pivotant (24) et la surface de la partie de guidage, il est prévu un élément élastique (31) qui est fixé sur le côté de pression (29) du levier pivotant et/ou au moins sur le corps de chariot (21) ou au premier élément de palier (28) et s'étend depuis celui-ci dans la direction longitudinale au-delà de la partie de pression (25), en particulier en enjambant l'espace entre le premier et le deuxième élément de palier (28) et la partie de pression (25) du levier pivotant (24), et est fixé au premier et au deuxième élément de palier (28).

9. Agencement de palier lisse (1) selon la revendication 8,
**caractérisé en ce que**
l'élément élastique comprend une feuille en élastomère.

10. Agencement de palier lisse selon l'une quelconque des revendications précédentes,
**caractérisé en ce que**
les éléments de palier sont reliés de manière amovible, en particulier par des vis, au corps du chariot.

11. Agencement de palier lisse (1) selon l'une quelconque des revendications précédentes,
**caractérisé en ce que**
les sections de guidage sont réalisées d'un seul tenant avec le corps du rail.

12. Agencement de palier lisse (1) selon l'une quelconque des revendications précédentes,
**caractérisé en ce que**
le rail est en métal ou en plastique.

13. Agencement de palier lisse (1) selon l'une quelconque des revendications précédentes,
**caractérisé en ce que**
la partie d'actionnement du levier pivotant est pourvue d'une poignée.

14. Agencement de palier lisse (1) selon l'une des revendications précédentes,
**caractérisé en ce que**
le côté de pression (29) de la partie de pression du levier pivotant est pourvu d'une gorge qui est adaptée à la surface cylindrique de la première section de guidage.

15. Chariot (20) pour un agencement de palier lisse (1) selon l'une quelconque des revendications précédentes, dans lequel le chariot (20) est conçu de manière à correspondre à un rail (10) qui présente un corps de rail (11) s'étendant dans une direction longitudinale (X), sur lequel sont prévues deux sections de guidage cylindriques (12, 13) s'étendant dans la direction longitudinale (X) et espacées l'une de l'autre dans une direction transversale (12, 13), qui sont reliées chacune au corps de rail par l'intermédiaire d'une zone de liaison, le chariot (20) comprenant un corps de chariot (21) s'étendant dans la direction transversale, sur lequel sont prévus des éléments de palier (28) dont au moins un est associé à une première section de guidage (12, 13) et au moins un autre est associé à une deuxième des sections de guidage, les éléments de palier (28) présentant chacun un passage cylindrique (15) correspondant à la section de guidage (12, 13) qui leur est associée, avec une fente longitudinale pour laisser passer la zone de liaison, des éléments de glissement (16) étant disposés dans les passages (15) qui forment dans le passage respectif (15) une surface d'appui coulissante qui, en position de montage, s'appuie contre la section de guidage respective associée (12, 13),
**caractérisé en ce**
**qu'**un premier des éléments de palier (28) est conçu pour recevoir dans la position de montage dans son passage (15) la première section de guidage (12, 13), le chariot (20) présentant, décalé dans la direction longitudinale (X) par rapport au premier élément de palier (28), une partie de retenue (22) qui est pourvue d'un palier (23) dans lequel est monté l'axe de pivotement (23) d'un levier pivotant (24), le levier pivotant (24) pouvant pivoter d'au moins 45° autour de l'axe de pivotement (23) pour passer d'une première position à une deuxième position, le levier pivotant (24) présentant, d'un côté de l'axe de pivotement (23), une partie courte (25) formée en tant que partie de pression et, de l'autre côté de l'axe de pivotement (23), une partie longue formée en tant que partie d'actionnement, la partie de pression (25) étant décalée dans le sens longitudinal par rapport au premier élément de palier (28) et peut être bougé à côté, par rapport à la direction longitudinale, du premier élément de palier (28) par le mouvement de pivotement et, dans la première position, appuie avec le côté de pression (29) sur une surface de la première section de guidage (12) et empêche le déplacement du chariot et, dans la deuxième position, est dégagée de la surface de la première section de guidage (12, 13).

16. Chariot selon la revendication 15,
**caractérisé en ce que**
l'axe de pivotement est disposé dans la direction transversale à l'extérieur du passage du premier élément de palier (28) et est disposé sur un côté de ce passage (15) qui est orienté dans la direction transversale à l'élément de palier supplémentaire (28) associé à la deuxième partie de guidage (12, 13).
